# EUROPÄISCHE PATENTANMELDUNG

(11) **EP 4 480 796 A1**
(43) Veröffentlichungstag der Anmeldung: **25.12.2024**
(21) Anmeldenummer: 24165428.4
(22) Anmeldetag: 22.03.2024
(51) Int. Cl.: B62H 5/14

(54) **VERFAHREN ZUM STEUERN EINES RAHMENSCHLOSSES EINES FAHRZEUGS**

(30) Priorität: 20.06.2023 DE 102023116136
(71) Anmelder: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(57) **Zusammenfassung**

Die Erfindung betrifft ein Verfahren zum Steuern eines Rahmenschlosses (16) eines Fahrzeugs, welches einen elektrischen Antriebsmotor (10), eine Steuereinheit (11, 12) zur Steuerung des Antriebsmotors (10) und ein an einem Rahmen des Fahrzeugs angebrachtes Rahmenschloss (16) umfasst, wobei das Rahmenschloss (16) einen durch einen Nutzer manuell aus einer Offenstellung in eine Geschlossenstellung bringbaren Schließbügel (11) und ein elektrisch betätigbares Verriegelungselement (23) aufweist, welches den Schließbügel (11) sowohl in der Offenstellung als auch in der Geschlossenstellung verriegelt und welches durch einen elektrischen Aktor (39) des Rahmenschlosses (16) in eine den Schließbügel freigebende Entriegelungsstellung (270) versetzbar ist, wobei der Aktor (39) des Rahmenschlosses (16) mit der Steuereinheit (11, 12) verbunden ist und von der Steuereinheit (11, 12) ein Entriegelungssignal zum Versetzen des Verriegelungselements in die den Schließbügel freigebende Entriegelungsstellung (270) erhält, wenn die Steuereinheit (11, 12) ein- oder ausgeschaltet wird.

## Beschreibung

Die Erfindung betrifft ein Verfahren zum Steuern eines Rahmenschlosses eines Fahrzeugs, welches einen elektrischen Antriebsmotor, eine Steuereinheit zur Steuerung des Antriebsmotors und ein an einem Rahmen des Fahrzeugs angebrachtes Rahmenschloss umfasst, wobei das Rahmenschloss einen durch einen Nutzer manuell aus einer Offenstellung in eine Geschlossenstellung bringbaren Schließbügel und ein elektrisch betätigbares Verriegelungselement aufweist, welches den Schließbügel sowohl in der Offenstellung als auch in der Geschlossenstellung verriegelt und welches durch einen elektrischen Aktor des Rahmenschlosses in eine den Schließbügel freigebende Entriegelungsstellung versetzbar ist.

Ein derartiges Rahmenschloss ist grundsätzlich bekannt und kommt üblicherweise an einem Fahrrad zum Einsatz. Es wird auch als halbautomatisches Rahmenschloss bezeichnet, da zwar die Freigabe des Schließbügels automatisch, insbesondere elektrisch, erfolgt, der Schließbügel selbst aber manuell durch den Nutzer aus der Offenstellung in die Geschlossenstellung gebracht werden muss. Herkömmlicherweise ist ein solches halbautomatisches Rahmenschloss direkt mit einem Smartphone koppelbar und sodann durch eine auf dem Smartphone installierte App steuerbar.

Der Erfindung liegt die Aufgabe zugrunde, ein nutzerfreundlicheres Verfahren zum Steuern eines Rahmenschlosses zu schaffen.

Gelöst wird die Aufgabe durch ein Verfahren zum Steuern eines Rahmenschlosses eines Fahrzeugs mit den Merkmalen des Anspruchs 1 und insbesondere dadurch, dass der Aktor des Rahmenschlosses mit der Steuereinheit verbunden ist und von der Steuereinheit ein Entriegelungssignal zum Versetzen des Verriegelungselements in die den Schließbügel freigebende Entriegelungsstellung erhält, wenn die Steuereinheit ein- oder ausgeschaltet wird.

Unter einem Fahrzeug wird in diesem Zusammenhang beispielsweise ein Elektrofahrrad, insbesondere E-Bike oder Pedelec, ein Elektrodreirad, ein Elektrorollstuhl, ein Elektroquad oder dergleichen verstanden.

Der erfindungsgemäße Gedanke besteht darin, das Rahmenschloss nicht mehr direkt mit dem Smartphone eines Nutzers zu koppeln, sondern stattdessen an die Steuereinheit des Fahrzeugs anzubinden und durch das Einschalten- bzw. Ausschalten der Steuereinheit zu steuern. Eine Kopplung des Rahmenschlosses mit dem Smartphone eines Nutzers und Steuerung des Rahmenschlosses über eine auf dem Smartphone installierte App kann somit entfallen, wodurch der Bedienkomfort des Rahmenschlosses und somit des Fahrzeugs insgesamt deutlich erhöht ist.

Bei der Steuereinheit handelt es sich erfindungsgemäß um die Steuereinheit, welche zur Steuerung des Antriebsmotors dient, d.h. also um die zentrale Steuereinheit des Fahrzeugs, die oft auch als Bordcomputer bezeichnet wird. Die Steuereinheit kann am Lenker des Fahrzeugs montiert sein, damit die Steuereinheit für den Nutzer des Fahrzeugs während der Fahrt gut bedienbar und/oder ein Display der Steuereinheit während der Fahrt gut sichtbar ist.

Vorteilhafte Weiterbildungen der Erfindung sind den abhängigen Ansprüchen, der Beschreibung und der Zeichnung zu entnehmen.

Gemäß einer Ausführungsform kann die Steuereinheit beim Einschalten eine Authentifikation des Nutzers durchführen und nur dann ein Entriegelungssignal an den Aktor des Rahmenschlosses senden, wenn der Nutzer positiv authentifiziert wurde. Dies trägt dazu bei, eine unbefugte Öffnung des Rahmenschlosses zu verhindern, und verbessert somit den Diebstahlschutz.

Grundsätzlich ist es denkbar, den Aktor des Rahmenschlosses mittels einer kurzreichweitigen drahtlosen Kommunikationsverbindung mit der Steuereinheit zu verbinden. Kostengünstiger und sicherer ist es jedoch, wenn der Aktor des Rahmenschlosses drahtgebunden mit der Steuereinheit verbunden ist.

Gemäß einer weiteren Ausführungsform kann die Steuereinheit nach dem Einschalten bzw. Ausschalten den Aktor des Rahmenschlosses authentifizieren und (a) das Entriegelungssignal bei positiver Authentifikation an den Aktor des Rahmenschlosses senden und/oder (b) bei negativer Authentifikation eine Fehlermeldung an den Nutzer ausgeben und, im Falle eines Ausschaltens der Steuereinheit, danach herunterfahren. Durch die Authentifizierung des Aktors des Rahmenschlosses durch die Steuereinheit wird sichergestellt, dass der Aktor des Rahmenschlosses nur durch eine diesem zugeordnete, d.h. legitime, Steuereinheit gesteuert werden kann. Auf diese Weise wird verhindert, dass sich der Aktor des Rahmenschlosses durch eine fremde Steuereinheit unbefugt in die den Schließbügel freigebende Entriegelungsstellung versetzen lässt, und der Diebstahlschutz noch weiter verbessert.

Damit sich das Rahmenschloss nicht während sich drehender Räder des Fahrzeugs schließen lässt, kann die Steuereinheit im Falle eines Ausschaltens der Steuereinheit den Bewegungszustand des Fahrzeugs überprüfen und das Entriegelungssignal nur dann an den Aktor des Rahmenschlosses senden, wenn das Fahrzeug stillsteht.

Für einen noch höheren Bedienkomfort kann der Aktor des Rahmenschlosses nach Erhalt des Entriegelungssignals das Verriegelungselement für eine erste vorbestimmte Zeitdauer in die den Schließbügel freigebende Entriegelungsstellung versetzen, beispielsweise für eine Dauer von bis zu mehreren 10 Sekunden, insbesondere 10 s bis 60 s und bevorzugt 10 s bis 30 s. Die erste vorbestimmte Zeitdauer definiert mit anderen Worten ein Zeitfenster, während dessen der Nutzer nach dem Ausschalten der Steuereinheit den Schließbügel aus der Offenstellung in die Geschlossenstellung oder gegebenenfalls nach dem Einschalten der Steuereinheit aus der Geschlossenstellung in die Offenstellung bringen kann.

Gemäß einer weiteren Ausführungsform kann die Steuereinheit mit einem Sensor zur Detektion der Offenstellung und Geschlossenstellung des Schließbügels verbunden sein und (a) dem Nutzer ein Verschließen des Rahmenschlosses bestätigen und danach herunterfahren, wenn der Schließbügel innerhalb der ersten vorbestimmten Zeitdauer aus der Offenstellung in die Geschlossenstellung gebracht wurde, oder (b) dem Nutzer eine Fehlermeldung ausgeben und danach herunterfahren, wenn der Schließbügel nicht innerhalb der ersten vorbestimmten Zeitdauer aus der Offenstellung in die Geschlossenstellung gebracht wurde. Bei dem Sensor kann es sich beispielsweise um einen Magnetsensor handelt.

Entsprechend kann die Steuereinheit (a) dem Nutzer eine Öffnung des Rahmenschlosses bestätigen, wenn der Schließbügel innerhalb der ersten vorbestimmten Zeitdauer aus der Geschlossenstellung in die Offenstellung gebracht wurde, oder (b) dem Nutzer eine Fehlermeldung ausgeben, wenn der Schließbügel nicht innerhalb der ersten vorbestimmten Zeitdauer aus der Geschlossenstellung in die Offenstellung gebracht wurde.

Für eine noch weitere Erhöhung des Bedienkomforts kann der Schließbügel entgegen der Federkraft einer Rückstellfeder aus der Offenstellung in die Geschlossenstellung bringbar sein. Die Rückstellfeder bewirkt somit, dass das Rahmenschloss selbsttätig aufspringt, d.h. der Schließbügel seine Offenstellung einnimmt, sobald der Aktor des Rahmenschlosses ein Entriegelungssignal von der Steuereinheit erhält und den Schließbügel freigibt. Eine manuelle Betätigung des Schließbügels durch den Nutzer ist also nur zum Verschließen des Rahmenschlosses erforderlich.

Gemäß einer weiteren Ausführungsform kann die Steuereinheit, insbesondere drahtgebunden, mit einem elektrischen Aktor eines Batteriefachschlosses des Fahrzeugs verbunden sein, durch welchen das Batteriefachschloss entriegelbar ist, um eine Entnahme einer in dem Batteriefach aufgenommenen Batterie zu ermöglichen. Bei dieser Batterie kann es sich insbesondere um die zur Versorgung des Antriebsmotors mit elektrischer Energie vorgesehene Batterie handeln, welche hier auch als Hauptbatterie bezeichnet wird. Die Batterie ist bevorzugt wiederaufladbar.

Möchte der Nutzer die Batterie aus dem Batteriefach entnehmen, während die Steuereinheit eingeschaltet ist, so kann die Steuereinheit in Reaktion auf eine manuelle Nutzereingabe an der Steuereinheit ein Entriegelungssignal zur Entriegelung des Batteriefachschlosses an den Aktor des Batteriefachschlosses senden.

Alternativ oder zusätzlich kann die Steuereinheit im Falle eines Ausschaltens der Steuereinheit ein Entriegelungssignal dann automatisch an den Aktor des Batteriefachschlosses senden, wenn zuvor der Schließbügel des Rahmenschlosses aus der Offenstellung in die Geschlossenstellung gebracht wurde. Sofern das Rahmenschloss verschlossen wurde, erhält der Nutzer also auch beim Ausschalten der Steuereinheit die Möglichkeit die Batterie zu entnehmen. Wird das Rahmenschloss ausschließlich durch diese Batterie, d.h. die Hauptbatterie, mit elektrischer Energie versorgt, ist durch die Abfrage der Stellung des Schließbügels sichergestellt, dass der Nutzer das Rahmenschloss verschließt, bevor er die Batterie entnehmen kann. Denkbar ist aber auch, dass zusätzlich zu der Hauptbatterie eine eigene Rahmenschlossbatterie vorgesehen ist, welche eine Betätigung des Rahmenschlosses unabhängig von der Hauptbatterie ermöglicht.

Ähnlich wie bei der Ansteuerung des Rahmenschlosses kann die Steuereinheit zur Vermeidung einer unbefugten Entnahme der Batterie den Aktor des Batteriefachschlosses authentifizieren und (a) bei positiver Authentifikation das Entriegelungssignal an den Aktor des Batteriefachschlosses senden und/oder (b) bei negativer Authentifikation eine Fehlermeldung an den Nutzer ausgeben und, im Falle eines Ausschaltens der Steuereinheit, danach herunterfahren.

Des Weiteren kann ähnlich wie der Aktor des Rahmenschlosses auch der Aktor des Batteriefachschlosses das Batteriefachschloss nach Erhalt des Entriegelungssignals für eine zweite vorbestimmte Zeitdauer entriegeln, beispielsweise für eine Dauer von bis zu mehreren 10 Sekunden, insbesondere 10 s bis 60 s und bevorzugt 10 s bis 30 s. Die erste und die zweite vorbestimmte Zeitdauer können gleich oder unterschiedlich lang sein.

Entsprechend kann der Aktor des Batteriefachschlosses das Batteriefachschloss nach Ablauf der zweiten vorbestimmten Zeitdauer und Nichtentnahme der Batterie wieder automatisch verriegeln und die Steuereinheit, im Falle eines Ausschaltens der Steuereinheit, herunterfahren.

Weiterer Gegenstand der Erfindung ist ein Fahrzeug mit einen elektrischen Antriebsmotor, einer Steuereinheit zur Steuerung des Antriebsmotors, einem Rahmen und einem an dem Rahmen angebrachten Rahmenschloss, wobei das Rahmenschloss einen durch einen Nutzer manuell aus einer Offenstellung in eine Geschlossenstellung bringbaren Schließbügel und ein elektrisch betätigbares Verriegelungselement aufweist, welches den Schließbügel sowohl in der Offenstellung als auch in der Geschlossenstellung verriegelt und welches durch einen elektrischen Aktor des Rahmenschlosses in eine den Schließbügel freigebende Entriegelungsstellung versetzbar ist, wobei der Aktor des Rahmenschlosses mit der Steuereinheit verbunden ist und wobei die Steuereinheit so konfiguriert ist, dass sie beim Ein- und Ausschalten jeweils ein Entriegelungssignal zum Versetzen des Verriegelungselements in die den Schließbügel freigebende Entriegelungsstellung an den Aktor des Rahmenschlosses sendet. Durch dieses Fahrzeug lassen sich die voranstehend genannten Vorteile entsprechend erreichen.

Nachfolgend wird die Erfindung rein beispielhaft anhand möglicher Ausführungsformen unter Bezugnahme auf die beigefügte Zeichnung beschrieben. Es zeigen:
- Fig. 1: eine schematische Darstellung eines Fahrrads mit einem Antriebsmotor, einer Steuereinheit, einem Rahmenschloss und einem Batteriefachschloss;
- Fig. 2A und 2B: schematische Darstellungen des Rahmenschlosses bei unterschiedlichen Stellungen eines Schließbügels des Rahmenschlosses;
- Fig. 3: ein Ablaufschema eines Öffnens des Rahmenschlosses;
- Fig. 4: ein Ablaufschema eines Schließens des Rahmenschlosses;
- Fig. 5: ein Ablaufschema eines Schließens des Rahmenschlosses und Öffnens des Batteriefachschlosses.

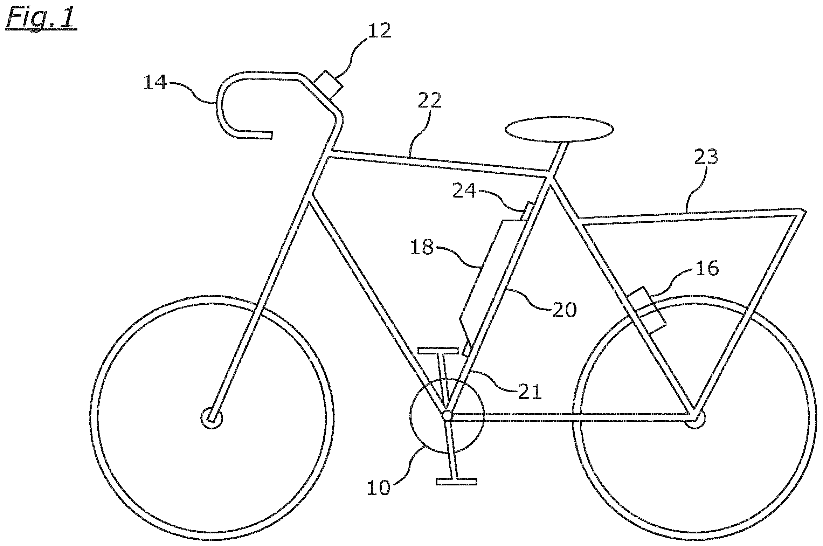

Fig. 1 zeigt ein Fahrzeug, genauer gesagt ein Elektrofahrrad, beispielsweise ein E-Bike oder ein Pedelec, welches mit einem elektrischen Antriebsmotor 10 ausgestattet ist. Im vorliegenden Ausführungsbeispiel ist der Antriebsmotor 10 im Bereich eines Tretlagers des Fahrrads angeordnet. Es ist aber ebenso möglich, den Antriebsmotor 10 an einer Vorderradnabe oder einer Hinterradnabe des Fahrzeugs anzubringen.

Zur Steuerung des Antriebsmotors 10 ist eine Steuereinheit 12 mit einem Display vorgesehen. Zumindest das Display, alternativ die gesamte Steuereinheit 12 ist im Bereich eines Lenkers 14 des Fahrrads angebracht und kann von einem Nutzer des Fahrrads beim Verlassen des Fahrrads abgenommen werden.

Das Fahrrad verfügt ferner über ein an den Hinterradstreben des Fahrrads montiertes Rahmenschloss 16, welches ebenfalls durch die Steuereinheit 12 gesteuert wird, wie nachfolgend genauer beschrieben wird.

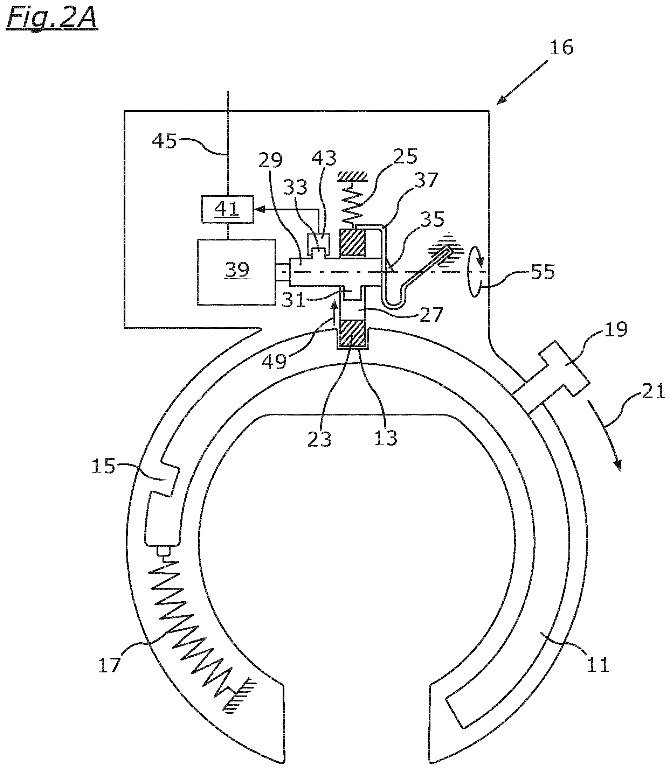

Der Aufbau des Rahmenschlosses 16 ist in Fig. 2A schematisch gezeigt. Das Rahmenschloss 16 besitzt einen als Rundbügel ausgebildeten Schließbügel 11 zum Umgreifen des Hinterrads. Der Schließbügel 11 besitzt eine Offenstellung-Eingriffsvertiefung 13 und eine Geschlossenstellung-Eingriffsvertiefung 15, und er ist mittels einer Zugfeder 17 in Richtung einer in Fig. 2A gezeigten Offenstellung vorgespannt. Solange der Schließbügel 11 nicht verriegelt ist, kann er mittels einer Handhabe 19 entgegen der Vorspannung entlang einer Schließrichtung 21 in Richtung einer Geschlossenstellung gedreht werden.

Mit dem Schließbügel 11 wirkt ein Verriegelungselement 23 zusammen, gemäß diesem Ausführungsbeispiel in Form eines Riegels 23, der von einer Druckfeder 25 in Richtung einer in Fig. 2A gezeigten Verriegelungsstellung vorgespannt wird. Der Riegel 23 besitzt eine zentrale Ausnehmung 27. In diese greift eine Welle 29 ein, die im Bereich des Riegels 23 einen Entriegelungsnocken 31 besitzt. An einem anderen Längsabschnitt besitzt die Welle 29 einen Schaltnocken 33. Die Vorderseite der Welle 29 ist als eine exzentrisch angeordnete schräge Fläche in Form einer Freigabenase 35 ausgebildet. Diese wirkt mit einer Blockierfeder 37 zusammen, wie nachfolgend noch erläutert wird.

Als Antriebseinrichtung für die Welle 29 ist ein elektrischer Aktor 39 vorgesehen, nachfolgend als erster Aktor 39 bezeichnet, im vorliegenden Ausführungsbeispiel ein Elektromotor, der vorzugsweise ein integriertes oder aufgesetztes Getriebe für eine Übersetzung ins Langsame besitzt (nicht gezeigt). Dem ersten Aktor 39 ist ein Controller 41 zugeordnet, welcher eingangsseitig mit einem Kontaktschalter 43 verbunden ist, der mit dem Schaltnocken 33 der Welle 29 zusammenwirkt. Ferner ist der Controller 41 über eine elektrische Leitung 45 drahtgebunden mit der Steuereinheit 12 verbunden, wobei die elektrische Leitung 45 nicht nur zur Versorgung des ersten Aktors 39 und Controllers 41 mit elektrischer Energie sondern auch zur Übertragung von Steuersignalen dient.

Das in Fig. 2A gezeigte Rahmenschloss 16 dient zum Sichern des Fahrrads gegen eine unbefugte Benutzung. Hierfür kann der Schließbügel 11 durch den Nutzer des Fahrrads ausgehend von der gezeigten Offenstellung manuell in eine Geschlossenstellung gebracht werden, in der der Schließbügel 11 in einen Zwischenraum zwischen zwei benachbarten Speichen des Hinterrads eingreift und das Hinterrad hierdurch blockiert. Der Controller 41 ist mit einem nicht gezeigten Sensor, z.B. einem Magnetsensor, verbunden, mit dessen Hilfe detektierbar ist, ob sich der Schließbügel 11 in seiner Offenstellung oder in seiner Geschlossenstellung befindet.

Der Schließbügel 11 kann sowohl in der gezeigten Offenstellung als auch in der genannten Geschlossenstellung mittels des Riegels 23 verriegelt werden. Hierfür drängt die Druckfeder 25 den Riegel 23 in Richtung des Schließbügels 11. Solange die Welle 29 mit dem Entriegelungsnocken 31 den Riegel 23 hierfür freigibt, liegt der Riegel 23 deshalb an der Oberseite des Schließbügels 11 an oder greift in eine der beiden Eingriffsvertiefungen 13, 15 ein, falls diese sich auf Höhe des Riegels 23 befinden. Wenn der Riegel 23 in die Offenstellung-Eingriffsvertiefung 13 eingreift, ist der Schließbügel 11 in der Offenstellung gesichert, wie in Fig. 2A gezeigt ist. Falls hingegen der Riegel 23 in die Geschlossenstellung-Eingriffsvertiefung 15 eingreift, so entspricht dies der genannten Geschlossenstellung des Schließbügels 11.

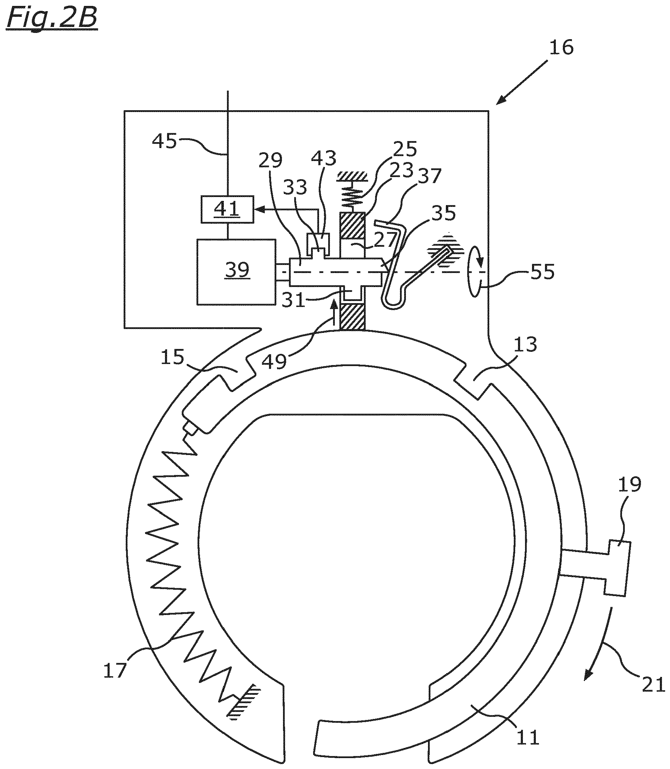

Durch Drehen der Welle 29 kann der Riegel 23 mittels des Entriegelungsnockens 31 kurzzeitig entlang einer Entriegelungsrichtung 49 entgegen der Vorspannung durch die Druckfeder 25 in eine Entriegelungsstellung gebracht werden. In dieser Entriegelungsstellung ist der Schließbügel 11 für eine Drehbewegung freigegeben. Insbesondere kann der Nutzer ausgehend von der Offenstellung gemäß Fig. 2A den Schließbügel 11 mittels der Handhabe 19 entlang der Schließrichtung 21 bewegen, um den Schließbügel 11 letztlich in die bereits erläuterte Geschlossenstellung zu überführen. Fig. 2B zeigt das Rahmenschloss während einer derartigen Bewegung des Schließbügels 11 in Schließrichtung 21. Falls zu diesem Zeitpunkt der Entriegelungsnocken 31 der Welle 29 den Riegel 23 bereits wieder freigibt und die Druckfeder 25 den Riegel 23 somit erneut in Richtung des Schließbügels 11 drängt, so beeinträchtigt dies nicht die weitere Schließbewegung des Schließbügels 11. Wie in Fig. 2B gezeigt ist, liegt der Riegel 23 nämlich lediglich so lange an der Oberseite des Schließbügels 11 an, bis die Geschlossenstellung-Eingriffsvertiefung 15 sich auf Höhe des Riegels 23 befindet. Sodann kann der Riegel 23 in die Geschlossenstellung-Eingriffsvertiefung 15 einschnappen, um den Schließbügel 11 in der somit erreichten Geschlossenstellung zu sichern.

Aus Fig. 2B ist auch die folgende Eigenschaft des gezeigten Rahmenschlosses 16 ersichtlich: Falls der Nutzer während der Schließbewegung des Schließbügels 11 - also während der Riegel 23 sich zwischen der Offenstellung-Eingriffsvertiefung 13 und der Geschlossenstellung-Eingriffsvertiefung 15 befindet - die Schließbetätigung nicht vollendet und der Riegel 23 somit nicht in Eingriff mit der Geschlossenstellung-Eingriffsvertiefung 15 gelangt, so zieht die Zugfeder 17 den Schließbügel 11 wieder zurück in die in Fig. 2A gezeigte Offenstellung, wobei der Riegel 23 aufgrund seiner Vorspannung sodann in die Offenstellung-Eingriffsvertiefung 13 schnappt (vgl. Fig. 2A). Der Schließbügel 11 ist hierdurch gegen eine unbefugte oder unbeabsichtigte nachfolgende Schließbetätigung gesichert. Gleiches gilt auch für den Fall, dass in der in Fig. 2A gezeigten Offenstellung des Schließbügels 11 der Riegel 23 infolge eines von der Steuereinheit 12 erhaltenen Schließbefehls zwar kurzzeitig entriegelt wird, der Schließbügel 11 während dieses Zeitintervalls jedoch überhaupt nicht in Schließrichtung 21 gedreht wird. In diesem Fall verbleibt der Schließbügel 11 also in der Offenstellung, und der Riegel 23 greift sofort wieder in die Offenstellung-Eingriffsvertiefung 13 ein, sobald der Riegel 23 aufgrund einer entsprechenden Drehbewegung der Welle 29 hierfür freigegeben worden ist.

Eine weitere Besonderheit des gezeigten Rahmenschlosses 16 liegt in der Blockierfeder 37. Solange der Riegel 23 sich - wie in Fig. 1A gezeigt - in der Verriegelungsstellung befindet, hintergreift die Blockierfeder 37 den Riegel 23. Dies gilt sowohl für die in Fig. 2A gezeigte Offenstellung als auch für die erläuterte Geschlossenstellung des Schließbügels 11. Solange die Blockierfeder 37 den Riegel 23 derartig hintergreift, ist dieser gegen eine unbefugte Entriegelungsbewegung nach der sogenannten "Hammerschlagmethode" gesichert. Um den Riegel 23 für eine (befugte) Bewegung in der Entriegelungsrichtung 49 freizugeben, wird die Blockierfeder 37 entgegen der von ihr ausgeübten Vorspannung kurzzeitig zurückgedrängt, um das freie Ende der Blockierfeder 37 außer Eingriff mit dem Riegel 23 zu bringen (vgl. Fig. 2B). Hierfür greift die Freigabenase 35 der Welle 29 an einer Zwangsführungsfläche der Blockierfeder 37 an, die eine Blockieraussparung der Blockierfeder 37 umgibt (nicht gezeigt). Sobald die Freigabenase 35 jedoch in die Blockieraussparung 53 eingreift, kann die Blockierfeder 37 aufgrund ihrer Vorspannung den Riegel 23 in der erläuterten Weise hintergreifen (vgl. Fig. 2A).

Zur Versorgung des Antriebsmotors 10, der Steuereinheit 12 und des Rahmenschlosses 16 mit elektrischer Energie ist eine wiederaufladbare Batterie 18 vorgesehen, welche in einem Batteriefach 20 aufgenommen ist, das an einem Sitzrohr 21 eines Rahmens 22 des Fahrzeugs ausgebildet ist. Alternativ ist es möglich, die Batterie 18 und das Batteriefach 20 in einen Gepäckträger 23 des Fahrzeugs zu integrieren.

Die Batterie 18 verfügt über einen nicht gezeigten Stromanschluss, welcher ein Aufladen der Batterie 18 direkt am Fahrrad ermöglicht. Darüber hinaus kann die Batterie 18 zu Wartungs- oder Austauschzwecken oder für ein vom Fahrrad entferntes Aufladen aus dem Batteriefach 20 entnommen werden.

Um eine unbefugte Entnahme und ein unbeabsichtigtes Herausfallen der Batterie 18 aus dem Batteriefach 20 zu verhindern, ist ein Batterieschloss 24 vorgesehen, welches die Batterie 18 in dem Batteriefach 20 sichert. Im vorliegenden Ausführungsbeispiel ist das Batterieschloss 24 in das Batteriefach 20 integriert und so ausgebildet, dass es automatisch einen verriegelten Zustand einnimmt, sobald die Batterie 18 in das Batteriefach 20 eingesetzt wird, beispielsweise indem ein nicht dargestellter und durch eine Feder vorgespannter Riegel in eine Rastvertiefung der Batterie 18 oder eines Batteriegehäuses einrastet oder einen beim Einsetzen der Batterie 18 verschwenkten Hebel blockiert. Auf diese Weise ist die in dem Batteriefach 20 aufgenommene Batterie 18 normal durch das verriegelte Batterieschloss 24 gesichert.

Die Entriegelung des Batterieschlosses 24 erfolgt elektrisch und wird ebenfalls durch die Steuereinheit 12 gesteuert, wie nachfolgend genauer beschrieben wird.

Hierzu umfasst das Batterieschloss 24 einen über eine nicht dargestellte elektrische Leitung drahtgebunden mit der Steuereinheit 11 verbundenen elektrischen Aktor, nachfolgend als zweiter Aktor bezeichnet, durch welchen der Riegel des Batterieschlosses 24 zumindest vorübergehend entgegen der Rückstellkraft der Feder in eine die Batterie 18 freigebende Entriegelungsstellung bringbar ist. Beispielsweise kann der zweite Aktor einen Elektromotor und einen Exzenter umfassen, welcher zwischen den Elektromotor und den Riegel geschaltet ist. Alternativ kann der zweite Aktor einen elektromagnetischen Aktuator umfassen, zum Beispiel kann der Riegel aus einem magnetischen Material gebildet sein und einen von einer Spule umgebenen Anker bilden.

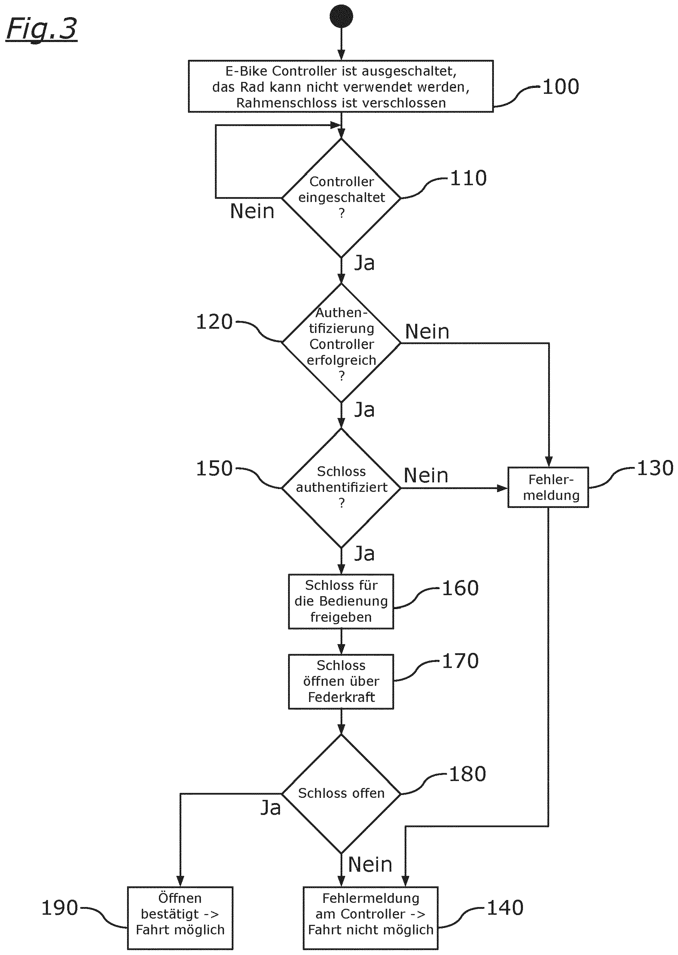

Anhand von Fig. 3 wird nun der Vorgang des Entriegelns des Rahmenschlosses 16 näher erläutert. Ausgangssituation 100 ist hierbei ein verriegeltes Rahmenschloss 16 sowie eine ausgeschaltete Steuereinheit 12.

Zur Inbetriebnahme des Fahrrads und Öffnung des Rahmenschlosses 16 schaltet der Nutzer die Steuereinheit 12 ein (110). Nach dem Einschalten überprüft die Steuereinheit 12 die Identität des Nutzers (120), beispielsweise anhand eines durch den Nutzer eingegebenen Codes oder durch Authentifizierung eines mobilen Endgeräts des Nutzers, z.B. dessen Smartphones. Alternativ kann die Authentifizierung auch durch eine Fernbedienung oder durch ein abnehmbares Teil der Steuereinheit 12 erfolgen, z.B. durch das Display der Steuereinheit 12.

Wird der Nutzer nicht positiv authentifiziert, so erzeugt die Steuereinheit 12 eine Fehlermeldung (130), welche beispielsweise an dem Display der Steuereinheit 12 angezeigt werden kann (140). Eine Öffnung des Rahmenschlosses 16 wird in diesem Fall nicht gestattet, und auch der Antriebsmotor 10 des Fahrrads wird nicht aktiviert.

Bei positiver Authentifizierung des Nutzers authentifiziert die Steuereinheit 12 als nächstes das Rahmenschloss 16 (150), genauer gesagt den ersten Aktor 39 des Rahmenschlosses 16. Wird der erste Aktor 39 nicht positiv authentifiziert, so erzeugt die Steuereinheit 12 eine Fehlermeldung (130), welche beispielsweise an dem Display der Steuereinheit 12 angezeigt werden kann (140). Eine Öffnung des Rahmenschlosses 16 wird in diesem Fall nicht gestattet, und auch der Antriebsmotor 10 des Fahrrads wird nicht aktiviert.

Bei positiver Authentifizierung des Rahmenschlosses 16 sendet die Steuereinheit 12 ein Entriegelungssignal an den ersten Aktor 39 (160), und der erste Aktor 39 versetzt den Riegel 23 in die den Schließbügel 11 freigebende Entriegelungsstellung (vgl. Fig. 2B).

Durch die Zugfeder 17 wird der Schließbügel 11 sodann in die in Fig. 2A gezeigte Offenstellung gezogen (170) und das Rahmenschloss 16 geöffnet (180). Die Öffnung des Rahmenschlosses 16 wird dem Nutzer durch die Steuereinheit 12 bestätigt (190), z.B. durch Ausgabe einer entsprechenden Meldung am Display der Steuereinheit 12.

Erreicht der Schließbügel 11 hingegen nicht seine Offenstellung, beispielsweise weil der Nutzer den Schließbügel 11 in der Geschlossenstellung hält oder weil eine Bewegung des Schließbügels 11 aus einem anderen Grund blockiert ist, z.B. einem mechanischen Defekt, so erzeugt die Steuereinheit 12 eine Fehlermeldung (140), welche beispielsweise an dem Display der Steuereinheit 12 angezeigt werden kann, und der Antriebsmotor 10 des Fahrrads wird nicht aktiviert.

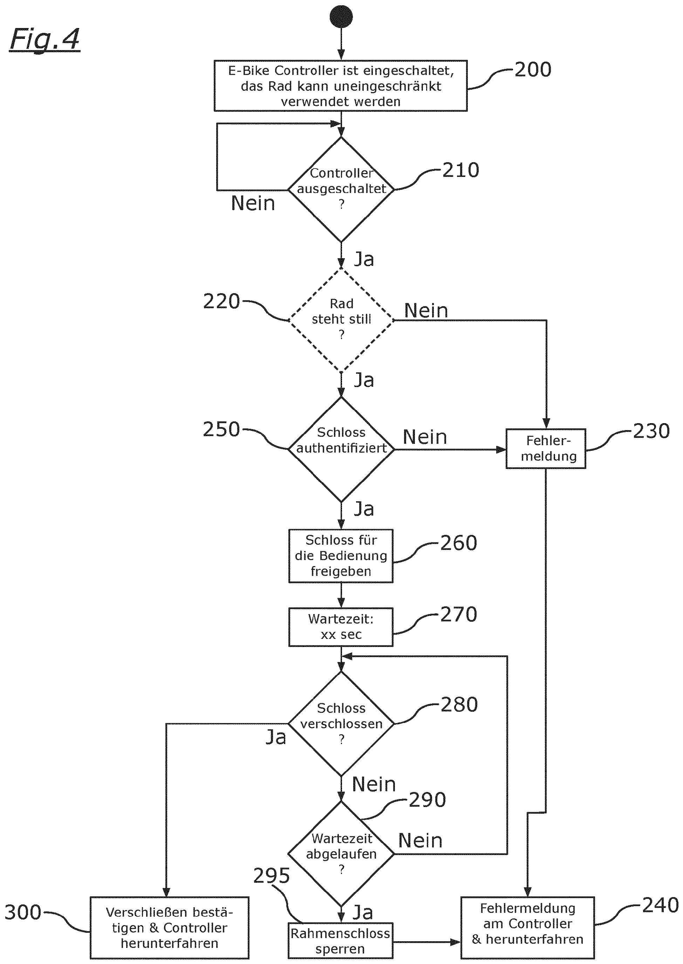

Anhand von Fig. 4 wird nun der prinzipielle Vorgang des Verriegelns des Rahmenschlosses 16 näher erläutert. Ausgangssituation (200) ist hierbei ein offenes Rahmenschloss 16 sowie eine eingeschaltete Steuereinheit 12.

Zum gesicherten Abstellen und Verlassen des Fahrrads und Verriegeln des Rahmenschlosses 16 schaltet der Nutzer die Steuereinheit 12 aus (210). Vor dem Herunterfahren überprüft die Steuereinheit 12, beispielsweise anhand der Drehzahl wenigstens eines Rades, zunächst, ob sich das Fahrrad noch bewegt (220).

Stellt die Steuereinheit 12 fest, dass das Fahrrad nicht stillsteht, so erzeugt die Steuereinheit 12 eine Fehlermeldung (230), welche beispielsweise an dem Display der Steuereinheit 12 angezeigt werden kann. Danach fährt die Steuereinheit 12 herunter, ohne dass das Rahmenschloss 16 verschlossen wurde (240).

Wird hingegen der Stillstand des Fahrrads verifiziert, authentifiziert die Steuereinheit 12 als nächstes das Rahmenschloss 16, genauer gesagt den ersten Aktor 39 des Rahmenschlosses 16 (250). Wird der erste Aktor 39 nicht positiv authentifiziert, so erzeugt die Steuereinheit 12 eine Fehlermeldung (230), welche beispielsweise an dem Display der Steuereinheit 12 angezeigt werden kann. Danach fährt die Steuereinheit 12 herunter, ohne dass das Rahmenschloss 16 verschlossen wurde (240).

Bei positiver Authentifizierung des Rahmenschlosses 16 sendet die Steuereinheit 12 ein Entriegelungssignal an den ersten Aktor 39 (260), und der erste Aktor 39 versetzt den Riegel 23 für eine erste vorbestimmte Zeitdauer in die den Schließbügel freigebende Entriegelungsstellung (270), beispielsweise für eine Dauer von bis zu mehreren 10 Sekunden, insbesondere 10 s bis 60 s und bevorzugt 10 s bis 30 s (vgl. Fig. 2B). Während dieser ersten vorbestimmten Zeitdauer kann der Nutzer den Schließbügel 11 des Rahmenschlosses 16 in die Geschlossenstellung bringen, d.h. also das Rahmenschloss 16 schließen.

Während der ersten vorbestimmten Zeitdauer überprüft die Steuereinheit 12 mit Hilfe des mit dem Controller 41 verbundenen Sensors den Schließzustand des Rahmenschlosses 16 (280).

Läuft die erste vorbestimmte Zeitdauer ab (290), ohne dass der Schließbügel 11 in die Geschlossenstellung gebracht wurde, so wird der Schließbügel 11 durch den ersten Aktor 39 wieder verriegelt (295), und die Steuereinheit 12 erzeugt eine Fehlermeldung, welche beispielsweise an dem Display der Steuereinheit 12 angezeigt werden kann (240). Danach fährt die Steuereinheit 12 herunter, ohne dass das Rahmenschloss 16 verschlossen wurde.

Erreicht der Schließbügel 11 vor Ablauf der vorbestimmten Zeitdauer hingegen seine Geschlossenstellung, so bestätigt die Steuereinheit 12 dem Nutzer das Verschließen des Rahmenschlosses 16, z.B. durch Ausgabe einer entsprechenden Meldung am Display der Steuereinheit 12. Danach fährt die Steuereinheit 12 herunter (300).

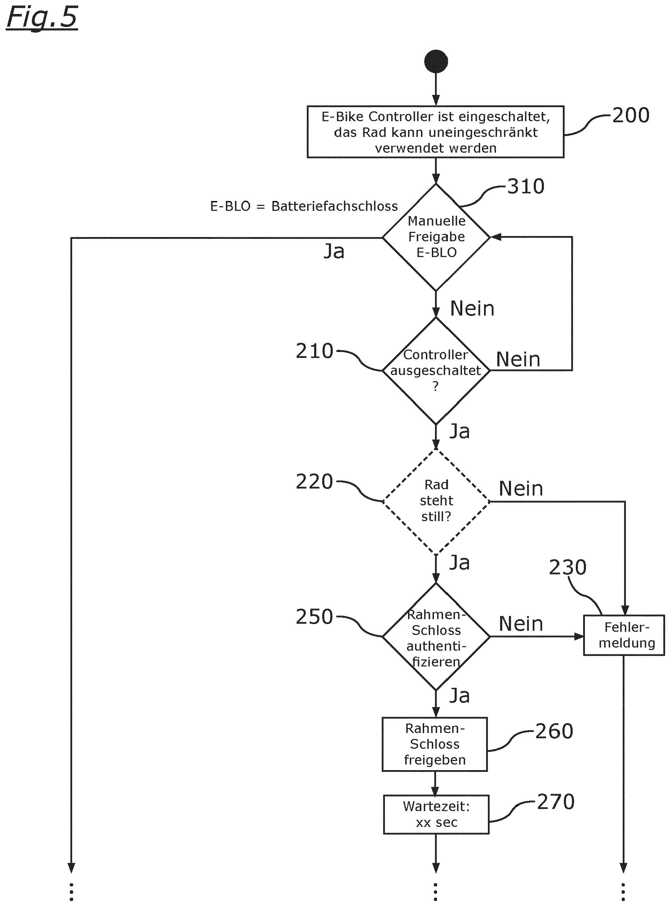

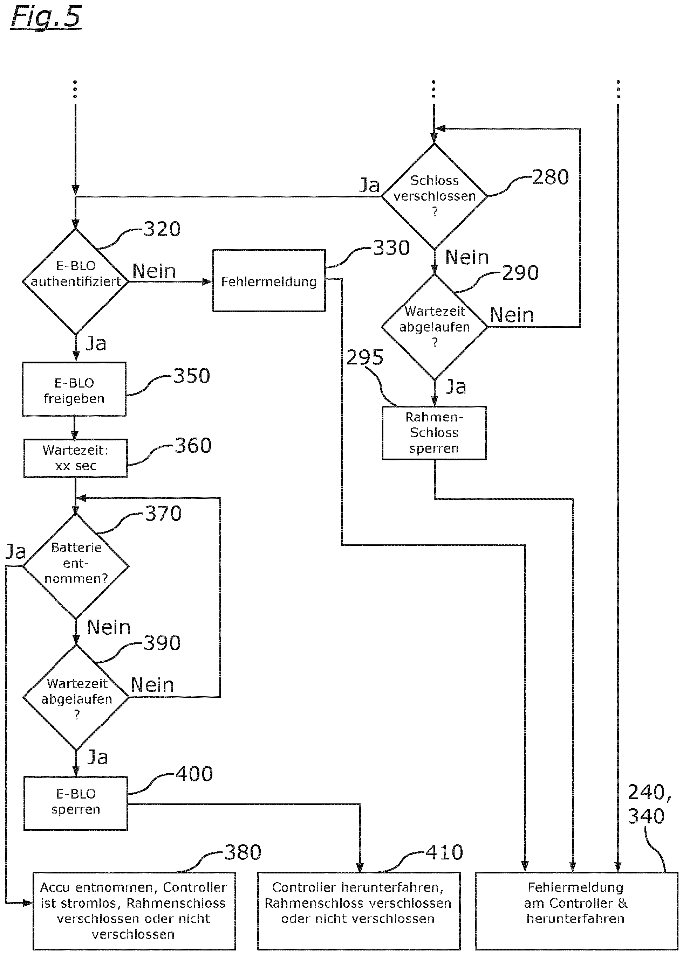

Anhand von Fig. 5 wird nun der Vorgang des Verriegelns des Rahmenschlosses 16 für den Fall näher erläutert, dass die Steuereinheit 12 wie im Zusammenhang mit Fig. 1 beschrieben zusätzlich auch noch das Batteriefachschloss 24 steuert. Ausgangssituation 200 ist wieder eine eingeschaltete Steuereinheit 12, ein offenes Rahmenschloss 16 sowie ein verriegeltes Batteriefachschloss 24.

Grundsätzlich kann der Nutzer bei eingeschalteter Steuereinheit 12 und stillstehendem Fahrrad jederzeit das Batteriefachschloss 24 entriegeln, indem er einen entsprechenden Entriegelungsbefehl in die Steuereinheit 12 eingibt (310), z.B. über das Display oder einen designierten Schalter der Steuereinheit 12.

Bei Empfang eines solchen Befehls authentifiziert die Steuereinheit 12 das Batteriefachschloss 24 (320), genauer gesagt den nicht gezeigten Aktor des Batteriefachschlosses 24 (zweiter Aktor). Wird der zweite Aktor nicht positiv authentifiziert, so erzeugt die Steuereinheit 12 eine Fehlermeldung (330), welche beispielsweise an dem Display der Steuereinheit 12 angezeigt werden kann (340). Danach fährt die Steuereinheit 12 herunter, ohne dass das Batteriefachschlosses 24 entriegelt wurde.

Bei positiver Authentifizierung des Batteriefachschlosses 24 sendet die Steuereinheit 12 ein Entriegelungssignal an den zweiten Aktor (350), und der zweite Aktor entriegelt das Batteriefachschloss 24 für eine zweite vorbestimmte Zeitdauer (360), beispielsweise für eine Dauer von bis zu mehreren 10 Sekunden, insbesondere 10 s bis 60 s und bevorzugt 10 s bis 30 s. Während dieser zweiten vorbestimmten Zeitdauer kann der Nutzer die Batterie aus dem Batteriefach entnehmen. Entnimmt der Nutzer die Batterie aus dem Batteriefach (370), so verliert die Steuereinheit 12 ihre Energieversorgung und geht aus, ohne dass das Rahmenschloss 16 verschlossen wurde (380).

Läuft die zweite vorbestimmte Zeitdauer ab (390), ohne dass die Batterie aus dem Batteriefach entnommen wurde, so wird das Batteriefachschloss 24 durch den zweiten Aktor wieder verriegelt (400), und die Steuereinheit 12 fährt herunter, ohne dass das Rahmenschloss 16 verschlossen wurde (410).

Schaltet der Nutzer zum gesicherten Abstellen und Verlassen des Fahrrads die Steuereinheit 12 aus (210), so überprüft die Steuereinheit 12 vor dem Herunterfahren, beispielsweise anhand der Drehzahl wenigstens eines Rades, zunächst, ob sich das Fahrrad noch bewegt (220).

Stellt die Steuereinheit 12 fest, dass das Fahrrad nicht stillsteht, so erzeugt die Steuereinheit 12 eine Fehlermeldung (230), welche beispielsweise an dem Display der Steuereinheit 12 angezeigt werden kann (240). Danach fährt die Steuereinheit 12 herunter, ohne dass das Rahmenschloss 16 geschlossen wurde.

Wird hingegen der Stillstand des Fahrrads verifiziert, authentifiziert die Steuereinheit 12 als nächstes das Rahmenschloss 16 (250), genauer gesagt den ersten Aktor 39 des Rahmenschlosses 16. Wird der erste Aktor 39 nicht positiv authentifiziert, so erzeugt die Steuereinheit 12 eine Fehlermeldung (230), welche beispielsweise an dem Display der Steuereinheit 12 angezeigt werden kann (240). Danach fährt die Steuereinheit 12 herunter, ohne dass das Rahmenschloss 16 geschlossen wurde.

Bei positiver Authentifizierung des Rahmenschlosses 16 sendet die Steuereinheit 12 ein Entriegelungssignal an den ersten Aktor 39 (260), und der ersten Aktor 39 versetzt den Riegel 23 für eine erste vorbestimmte Zeitdauer in die den Schließbügel freigebende Entriegelungsstellung (270), beispielsweise für eine Dauer von bis zu mehreren 10 Sekunden, insbesondere 10 s bis 60 s und bevorzugt 10 s bis 30 s (vgl. Fig. 2B). Während dieser ersten vorbestimmten Zeitdauer kann der Nutzer den Schließbügel 11 des Rahmenschlosses 16 in die Geschlossenstellung bringen, d.h. also das Rahmenschloss 16 verschließen.

Während der ersten vorbestimmten Zeitdauer überprüft die Steuereinheit 12 mit Hilfe des mit dem Controller 41 verbundenen Sensors den Schließzustand des Rahmenschlosses 16.

Läuft die erste vorbestimmte Zeitdauer ab (290), ohne dass der Schließbügel 11 in die Geschlossenstellung gebracht wurde, so wird der Schließbügel 11 durch den ersten Aktor 39 wieder verriegelt (295), und die Steuereinheit 12 erzeugt eine Fehlermeldung, welche beispielsweise an dem Display der Steuereinheit 12 angezeigt werden kann (240). Danach fährt die Steuereinheit 12 herunter, ohne dass das Rahmenschloss 16 verschlossen wurde.

Erreicht der Schließbügel 11 vor Ablauf der vorbestimmten Zeitdauer hingegen seine Geschlossenstellung, d.h. wird das Rahmenschlosses 16 rechtzeitig verschlossen, authentifiziert die Steuereinheit 12 wie voranstehend beschrieben das Batteriefachschloss 24 (320), genauer gesagt den Aktor des Batteriefachschlosses 24 (zweiter Aktor). Wird der zweite Aktor nicht positiv authentifiziert, so erzeugt die Steuereinheit 12 eine Fehlermeldung (330), welche beispielsweise an dem Display der Steuereinheit 12 angezeigt werden kann (340). Danach fährt die Steuereinheit 12 herunter, ohne dass das Batteriefachschlosses 24 entriegelt wurde, während das Rahmenschloss 16 geschlossen ist.

Bei positiver Authentifizierung des Batteriefachschlosses 24 sendet die Steuereinheit 12 ein Entriegelungssignal an den zweiten Aktor (350), und der zweite Aktor entriegelt das Batteriefachschloss 24 für eine zweite vorbestimmte Zeitdauer (360), beispielsweise für eine Dauer von bis zu mehreren 10 Sekunden, insbesondere 10 s bis 60 s und bevorzugt 10 s bis 30 s. Während dieser zweiten vorbestimmten Zeitdauer kann der Nutzer die Batterie aus dem Batteriefach entnehmen.

Entnimmt der Nutzer die Batterie aus dem Batteriefach (370), so verliert die Steuereinheit 12 ihre Energieversorgung und geht aus, während das Rahmenschloss 16 verschlossen ist (380).

Läuft die zweite vorbestimmte Zeitdauer ab, ohne dass die Batterie aus dem Batteriefach entnommen wurde, so wird das Batteriefachschloss 24 durch den zweiten Aktor wieder verriegelt (400), und die Steuereinheit 12 fährt herunter, während das Rahmenschloss 16 verschlossen ist (410).

Abschließend sei darauf hingewiesen, dass es sich bei der Verifikation des Stillstands des Fahrrads (220) um einen optionalen Verfahrensschritt handelt, welcher auch weggelassen werden kann. In diesem Fall würde die Steuereinheit 12 beim Ausschalten also direkt Schritt 250 durchführen, d.h. den Aktor 39 des Rahmenschlosses 16 authentifizieren.

## Patentansprüche

1. Verfahren zum Steuern eines Rahmenschlosses (16) eines Fahrzeugs, welches einen elektrischen Antriebsmotor (10), eine Steuereinheit (12) zur Steuerung des Antriebsmotors (10) und ein an einem Rahmen (22) des Fahrzeugs angebrachtes Rahmenschloss (16) umfasst, wobei das Rahmenschloss (16) einen durch einen Nutzer manuell aus einer Offenstellung in eine Geschlossenstellung bringbaren Schließbügel (11) und ein elektrisch betätigbares Verriegelungselement (23) aufweist, welches den Schließbügel (11) sowohl in der Offenstellung als auch in der Geschlossenstellung verriegelt und welches durch einen ersten elektrischen Aktor (39) in eine den Schließbügel (11) freigebende Entriegelungsstellung versetzbar ist,
**dadurch gekennzeichnet,**
**dass** der Aktor (39) des Rahmenschlosses (16) mit der Steuereinheit (12) verbunden ist und von der Steuereinheit (12) ein Entriegelungssignal zum Versetzen des Verriegelungselements (23) in die den Schließbügel (11) freigebende Entriegelungsstellung erhält, wenn die Steuereinheit (12) einoder ausgeschaltet wird.

2. Verfahren nach Anspruch 1,
**dadurch gekennzeichnet,**
**dass** die Steuereinheit (12) beim Einschalten eine Authentifikation des Nutzers durchführt und nur dann ein Entriegelungssignal an den Aktor (39) des Rahmenschlosses (16) sendet, wenn der Nutzer positiv authentifiziert wurde.

3. Verfahren nach Anspruch 1 oder 2,
**dadurch gekennzeichnet,**
**dass** die Steuereinheit (12) nach dem Einschalten bzw. Ausschalten den Aktor (39) des Rahmenschlosses (16) authentifiziert und (a) das Entriegelungssignal bei positiver Authentifikation an den Aktor (39) des Rahmenschlosses (16) sendet und/oder (b) bei negativer Authentifikation eine Fehlermeldung an den Nutzer ausgibt und, im Falle eines Ausschaltens der Steuereinheit (12), danach herunterfährt.

4. Verfahren nach einem der vorherigen Ansprüche,
**dadurch gekennzeichnet,**
**dass** die Steuereinheit (12) im Falle eines Ausschaltens der Steuereinheit (12) den Bewegungszustand des Fahrzeugs überprüft und das Entriegelungssignal nur dann an den Aktor (39) des Rahmenschlosses sendet, wenn das Fahrzeug stillsteht.

5. Verfahren nach einem der vorherigen Ansprüche,
**dadurch gekennzeichnet,**
**dass** der Aktor (39) des Rahmenschlosses (16) nach Erhalt des Entriegelungssignals das Verriegelungselement (23) für eine erste vorbestimmte Zeitdauer in die den Schließbügel (11) freigebende Entriegelungsstellung versetzt, beispielsweise für eine Dauer von bis zu mehreren 10 Sekunden, insbesondere 10 s bis 60 s und bevorzugt 10 s bis 30 s.

6. Verfahren nach Anspruch 5,
**dadurch gekennzeichnet,**
**dass** die Steuereinheit (12) mit einem Sensor zur Detektion der Offenstellung und Geschlossenstellung des Schließbügels (11) verbunden ist und die Steuereinheit (a) dem Nutzer ein Verschließen des Rahmenschlosses (16) bestätigt und danach herunterfährt, wenn der Schließbügel (11) innerhalb der ersten vorbestimmten Zeitdauer aus der Offenstellung in die Geschlossenstellung gebracht wurde, oder (b) dem Nutzer eine Fehlermeldung ausgibt und danach herunterfährt, wenn der Schließbügel (11) nicht innerhalb der ersten vorbestimmten Zeitdauer aus der Offenstellung in die Geschlossenstellung gebracht wurde.

7. Verfahren nach Anspruch 5 oder 6,
**dadurch gekennzeichnet,**
**dass** die Steuereinheit (12) mit einem Sensor zur Detektion der Offenstellung und Geschlossenstellung des Schließbügels (11) verbunden ist und die Steuereinheit (12) (a) dem Nutzer eine Öffnung des Rahmenschlosses (16) bestätigt, wenn der Schließbügel (11) innerhalb der ersten vorbestimmten Zeitdauer aus der Geschlossenstellung in die Offenstellung gebracht wurde, oder (b) dem Nutzer eine Fehlermeldung ausgibt, wenn der Schließbügel (11) nicht innerhalb der ersten vorbestimmten Zeitdauer aus der Geschlossenstellung in die Offenstellung gebracht wurde.

8. Verfahren nach einem der vorherigen Ansprüche,
**dadurch gekennzeichnet,**
**dass** der Schließbügel (11) entgegen der Federkraft einer Rückstellfeder (17) aus der Offenstellung in die Geschlossenstellung bringbar ist.

9. Verfahren nach einem der vorherigen Ansprüche,
**dadurch gekennzeichnet,**
**dass** die Steuereinheit (12) mit einem elektrischen Aktor eines Batteriefachschlosses (24) verbunden ist, insbesondere drahtgebunden verbunden ist, durch welchen das Batteriefachschloss (24) entriegelbar ist, um eine Entnahme einer in dem Batteriefach (20) aufgenommenen Batterie (18) zu ermöglichen.

10. Verfahren nach Anspruch 9,
**dadurch gekennzeichnet,**
**dass** die Steuereinheit (12) in Reaktion auf eine manuelle Nutzereingabe an der Steuereinheit (12) ein Entriegelungssignal zur Entriegelung des Batteriefachschlosses (24) an den Aktor des Batteriefachschlosses (24) sendet.

11. Verfahren nach Anspruch 9 oder 10,
**dadurch gekennzeichnet,**
**dass** die Steuereinheit (12) im Falle eines Ausschaltens der Steuereinheit (12) ein Entriegelungssignal automatisch an den Aktor des Batteriefachschlosses (24) sendet, wenn zuvor der Schließbügel (11) des Rahmenschlosses (16) aus der Offenstellung in die Geschlossenstellung gebracht wurde.

12. Verfahren nach Anspruch 10 oder 11,
**dadurch gekennzeichnet,**
**dass** die Steuereinheit (12) den Aktor des Batteriefachschlosses (24) authentifiziert und (a) bei positiver Authentifikation das Entriegelungssignal an den Aktor des Batteriefachschlosses (24) sendet und/oder (b) bei negativer Authentifikation eine Fehlermeldung an den Nutzer ausgibt und, im Falle eines Ausschaltens der Steuereinheit (12), danach herunterfährt.

13. Verfahren nach einem der Ansprüche 9 bis 12,
**dadurch gekennzeichnet,**
**dass** der Aktor des Batteriefachschlosses (24) das Batteriefachschloss (24) nach Erhalt des Entriegelungssignals für eine zweite vorbestimmte Zeitdauer entriegelt, beispielsweise für eine Dauer von bis zu mehreren 10 Sekunden, insbesondere 10 s bis 60 s und bevorzugt 10 s bis 30 s.

14. Verfahren nach Anspruch 13,
**dadurch gekennzeichnet,**
**dass** der Aktor des Batteriefachschlosses (24) das Batteriefachschloss (24) nach Ablauf der zweiten vorbestimmten Zeitdauer und Nichtentnahme der Batterie (18) wieder verriegelt und die Steuereinheit (12), im Falle eines Ausschaltens der Steuereinheit (12), herunterfährt.

15. Fahrzeug mit einen elektrischen Antriebsmotor (10), einer Steuereinheit (12) zur Steuerung des Antriebsmotors (10), einem Rahmen (22) und einem an dem Rahmen (22) angebrachten Rahmenschloss (16), wobei das Rahmenschloss (16) einen durch einen Nutzer manuell aus einer Offenstellung in eine Geschlossenstellung bringbaren Schließbügel (11) und ein elektrisch betätigbares Verriegelungselement (23) aufweist, welches den Schließbügel (11) sowohl in der Offenstellung als auch in der Geschlossenstellung verriegelt und welches durch einen elektrischen Aktor (39) des Rahmenschlosses (16) in eine den Schließbügel (11) freigebende Entriegelungsstellung versetzbar ist,
**dadurch gekennzeichnet,**
**dass** der Aktor des Rahmenschlosses (16) mit der Steuereinheit (12) verbunden ist und dass die Steuereinheit (12) so konfiguriert ist, dass sie beim Ein- und Ausschalten jeweils ein Entriegelungssignal zum Versetzen des Verriegelungselements (23) in die den Schließbügel (11) freigebende Entriegelungsstellung an den Aktor (39) des Rahmenschlosses (16) sendet.
